## Europäisches Patentamt

## European Patent Office

## Office européen des brevets

(19)

(11) Veröffentlichungsnummer: **0 110 141**
**B1**

(12)

# EUROPÄISCHE PATENTSCHRIFT

(45) Veröffentlichungstag der Patentschrift:
**22.07.87**

(51) Int. Cl.⁴: **F 03 B 3/12, F 03 B 11/02**

(21) Anmeldenummer: **83110738.8**

(22) Anmeldetag: **27.10.83**

(54) **Axial beaufschlagte Wasserturbine mit Durchflussmengensteuerung.**

(30) Priorität: **04.03.83 DE 3307697**
**28.10.82 DE 3239966**

(43) Veröffentlichungstag der Anmeldung:
**13.06.84 Patentblatt 84/24**

(45) Bekanntmachung des Hinweises auf die Patenterteilung:
**22.07.87 Patentblatt 87/30**

(84) Benannte Vertragsstaaten:
**AT BE CH DE FR GB IT LI NL SE**

(56) Entgegenhaltungen:
**CH-A-287 979**
**DE-B-1 087 090**
**FR-A-1 405 696**
**NL-A-35 204**

(73) Patentinhaber: **Gerk, Heinrich, Thomas- Mann-Strasse 12, D-6457 Maintal 2 (DE)**

(72) Erfinder: **Gerk, Heinrich, Thomas- Mann- Strasse 12, D-6457 Maintal 2 (DE)**

(74) Vertreter: **Hanewinkel, Lorenz, Dipl.- Phys., Patentanwalt Ferrariweg 17a, D-4790 Paderborn (DE)**

EP 0 110 141 B1

## Beschreibung

Die Erfindung betrifft eine Wasserturbine mit einer um eine vertikale Achse drehbar gelagerten Abtriebswelle mit einem mit Laufradschaufeln besetzten Laufrad, das von einem feststehenden Gehäusemantel konzentrisch umgeben ist, und mit einem in Strömungsrichtung vor dessen Laufradschaufeln koaxial angeordneten Leitschaufelkranz, dessen Leitschaufeln so zu der Laufradschaufelstellung orientiert sind, daß einströmendes Wasser mit hohem Wirkungsgrad das Laufrad antreibt, und mit einer verschieblichen Einstellvorrichtung, durch die der wirksame Austrittsquerschnitt des Laufrades verändert werden kann.

Es ist bekannt, Wasserturbinen mit schwenkbaren Leitschaufeln auszurüsten, um die durchfließende Wassermenge damit zu steuern. Dabei wird auch die Einströmung des Wassers in das Laufrad verändert. Außerdem wird mit der veränderten Wassermenge die Strömungsgeschwindigkeit im Laufrad kleiner bzw. größer. Dadurch wird der Wirkungsgrad dieser Turbinenart bei kleiner werdender Wassermenge zunehmend schlechter, und es erhöht sich hier die Kavitationsgefahr an der unteren Fläche der Laufradschaufeln.

Weiterhin ist es bekannt, die Laufradschaufeln schwenkbar anzuordnen, um die Durchflußmenge damit zu steuern. Dabei ist die Anzahl der Schaufeln pro Laufrad aus konstruktiven Gründen begrenzt.

Dadurch entsteht besonders bei geöffneten Schaufeln ein großer Wasserschlupf zwischen Gehäusewand und Schaufelaußenrand, oder bei geschlossenen Schaufeln ein großer Wasserschlupf zwischen den Schaufeln selbst. Auch hier wird der Wirkungsgrad bei kleineren Wassermengen zunehmend schlechter.

Die maschinellen Bauteile zur Regelung der Durchflußmenge durch die drehbaren Leitschaufeln und schwenkbaren Laufradflügel verursachen hohe Anschaffungskosten und unterliegen großem Verschleiß. Auch hier besteht, besonders bei eng geschlossenen Laufradschaufeln eine erhöhte Kavitationsgefahr.

Weiterhin ist es aus CH-PS 28 7979 und FR-PS 1 405 696 bekannt, die Wandflächen des Laufrades gegeneinander verschieblich anzuordnen, wobei die Laufradschaufeln durch eine der Wandflächen hindurchtreten, so daß der wirksame Querschnitt des Laufrades auf diese Weise veränderlich ist. Diese Konstruktion ist wegen der engen Führungen der Laufradschaufeln in der Wandfläche aufwendig.

Es ist weiterhin bekannt, den Einlaßquerschnitt von Turbinen durch gegeneinander verschiebliche konische Wände zu verändern. Hierbei entsteht aber bei geringer Durchströmung eine große Kavitationsgefahr im Laufrad und ein starker Abfall des Wirkungsgrades.

Es ist weiterhin aus DE-AS 1 087 090 bekannt, eine zentripetal beaufschlagte Turbine mit einer gegenüber dem Auslauf des Laufrades verschieblichen Nabe zu versehen, um damit den Durchfluß steuern zu können. Diese Turbinenart hat einen relativ begrenzten Wirkungsgrad insbesondere bei zunehmender Durchströmung, da die Wassermenge in eine Richtung, die nicht Wirkrichtung ist, bei höchster Geschwindigkeit und im engsten Querschnittsbereich umgelenkt wird.

Weiterhin ist es aus NL-A-35 204 bekannt, das Laufrad einer Wasserturbine gegenüber einem vorgeordneten Leitschaufelkranz und ggf. einem nachgeordneten Leitschaufelkranz axial verschieblich anzuordnen, wodurch jeweils bei einer veränderten Durchflußgeschwindigkeit der Turbinenwirkungsgrad in engen Grenzen verbessert werden kann; die Durchflußmenge kann dadurch jedoch nicht beeinflußt werden.

Es ist Aufgabe der Erfindung, eine Wasserturbine für mittlere und niedrige Wasserhöhen zu offenbaren, die einfach herzustellen ist, einen hohen Wirkungsgrad bei Durchströmung sowohl mit großer als mit kleiner Wassermenge besitzt, durch einfache Bedienung der Wassermenge angepaßt werden kann, und geringem Verschleiß insbesondere durch Kavitation unterliegt.

Die Lösung besteht darin, daß der Leitschaufelkranz über dem Laufrad angeordnet ist und an dem zylindrischen Gehäusemantel unterhalb oder neben dem unteren Bereich des Laufrades, abstromseitig der Austrittsquerschnitte sich in Strömungsrichtung erweiternd ein Gehäusekonus angeschlossen ist und das Laufrad eine zylindrische Nabe besitzt, die der Austrittsquerschnitte übergeht in einen sich in Strömungsrichtung erweiternder Verdrängerkonus und der Gehäusekonus und der Verdrängerkonus in Bezug zueinander axial so verschieblich gelagert sind, daß die abstromseitige Kante des Verdrängerkonus zwischen den beiden Kanten des Gehäusekonus einstellbar ist.

Bei der erfindungsgemäßen Konstruktion der Turbine sind keine aufwendigen Einzellagerungen und Verstellantriebe von Schaufeln erforderlich. Auch werden keine engen Führungen in Wandflächen über Schaufeln bewegt.

Auch der untere Bereich der Laufradschaufeln ist stets unter Druck, da der Austrittsquerschnitt geändert wird, wodurch eine Kavitation verhindert wird.

Weiterhin ist die Richtung der Strömung stets vertikal und zirkular, das heißt so wie sie optimal am Laufrad wirksam angreift. Eine Wirbel und somit Verluste erzeugende zusätzliche Richtungsumlenkung erfolgt nicht. Besonders vorteilhaft ist dabei, daß die höchste Geschwindigkeit im engsten Querschnitt auftritt und das abgebremste Wasser in einen erweiterten Querschnitt austritt. Das Trägheitsmoment des rotierenden Laufrades ist dadurch minimal.

Die Schaufelzahlen und Formen des Leit- und Laufrades können jeweils optimiert werden.

Durch diese Anordnung ergibt sich, daß auch bei unterschiedlichem Durchsatz, das heißt unterschiedlicher Fließgeschwindigkeit insbesondere in dem Leitschaufelkranz, die Eintrittsrichtung des Wassers in das Laufrad auch bei gleichbleibenden Schaufelstellungen weitgehend optimal ist. Bei hohem Durchsatz erfolgt eine stärkere Ablenkung (Rotation) des Wassers als bei geringem, und durch die Verstellung des Austrittsquerschnitts mit Hilfe der Verschiebung der konischen Leitflächen zueinander wirkt die Turbine im ersteren Fall teilweise radial und im letzteren fast axial in jeweils optimaler Weise.

Durch eine geeignete Steuerung der Durchflußverstellung läßt sich die Wasserhöhe stets optimal halten, und eine konstante Drehzahl der Turbine kann eingeregelt werden. Gemäß dem Wasserangebot oder der benötigten Leistung läßt sich die Turbine stets mit optimalem Wirkungsgrad betreiben.

Es ist eine vorteilhafte Teilerfindung, statt eines Leitschaufelkranzes mehrere mit zunehmendem Schaufelanstellwinkel hintereinander anzuordnen, da solche Kränze einfacher zu fertigen sind. Ebenso kann das Laufrad aus gestaffelten Einzelrädern vorteilhaft gefertigt werden, und unterschiedlichen Verhältnissen einfach angepaßt werden.

Die Ausführung der abstromseitigen Schaufelkanten ist vorteilhaft den Strömungsverhältnissen anzupassen, wie in den Beispielen für unterschiedliche Wasserhöhen bzw. Druckhöhen dargestellt ist.

Weiterhin wird vorteilhaft oberhalb von dem Turbinenmantel eine bekannte Einlaufspirale so angeordnet, daß die horizontale Fließgeschwindigkeit des Zuflusses in Rotationsgeschwindigkeit mit gleichem Drehsinn wie die der Leitschaufelrotation umgesetzt wird.

Es ist ein Vorteil der koaxialen Konstruktion der Turbine, daß alle beweglichen und funktionalen Bauteile eine geschlossene Baueinheit bilden, die in dem Gehäusemantel sehr einfach montiert bzw. zu Wartungsarbeiten aus diesem entnommen werden kann.

Weitere vorteilhafte Ausgestaltungen sind aus den Beispielen und den Unteransprüchen zu entnehmen.

Die Beispiele betreffen unter anderem Ausführungen für unterschiedliche Wasserstände. Die verschiedenen vorteilhaften Ausführungsdetails können in beliebigen Kombinationen miteinander verknüpft werden. Die dargestellten Mittel, die der Höhenverstellung dienen, z.B. Steuerwelle, Steuerhydraulik, Steuergestänge können in fachmännischer Weise durch äquivalente Mittel ersetzt werden.

Die Figuren zeigen im einzelnen folgendes:

Fig. 1 — Turbinen für niedrige und mittlere Druckhöhen mit verstellbarem Laufrad, senkrecht geschnitten, hoher Durchlaß,

Fig. 2 — wie Fig. 1, geringster Durchlaß,

Fig. 3 u. 4 — Abwicklung der Schaufelkränze schematisch gemäß Fig. 1 bzw. 2,

Fig. 5 — Turbine mit gestaffeltem Laufrad im Schnitt und schematischer Abwicklung der Schaufelkränze,

Fig. 6 u. 7 — wie Fig. 5 mit unterschiedlich gestalteten doppelten Leitschaufelkranz; verschiedene Durchlaßeinstellungen,

Fig. 8 — wie Fig. 7 mit Einlaufspirale und Gitterschieber,

Fig. 9 — Aufsicht zu Fig. 8,

Fig. 10 — Schnitt EE zu Fig. 8,

Fig. 11 — Turbine für sehr niedrige Wasserhöhen im Schnitt; großer Durchlaß; mit Gitterschieber und Einlaufspirale,

Fig. 12 — wie Fig. 11 mit kleinem Durchlaß,

Fig. 13 u. 14 — schematische Abwicklung des Lauftades in der Lage zum Gehäusekonns gemäß Fig. 11 bzw. 12,

Fig. 15 — Turbine für mittlere Wasserhöhen im Schnitt mit fest angeordnetem Laufrad und verschieblichem Verdrängerkonus. Linke Bildhälfte geringster Durchlaß; rechte Bildhälfte größter Durchlaß,

Fig. 16 — Alternative Laufradausführung zu Fig. 15,

Fig. 17 — Schnitt C-C zu Fig. 16,

Fig. 18 — Weitere alternative Laufradausführung zu Fig. 15,

Fig. 19 — Verdränger mit hydraulischer Verstelleinrichtung im teilweisen Schnitt,

Fig. 20 — Detailschnitt D-D des Verdrängers Fig. 19;

Fig. 21 — Aufsicht auf den Verdränger Fig. 19 mit Wirbelbrecher.

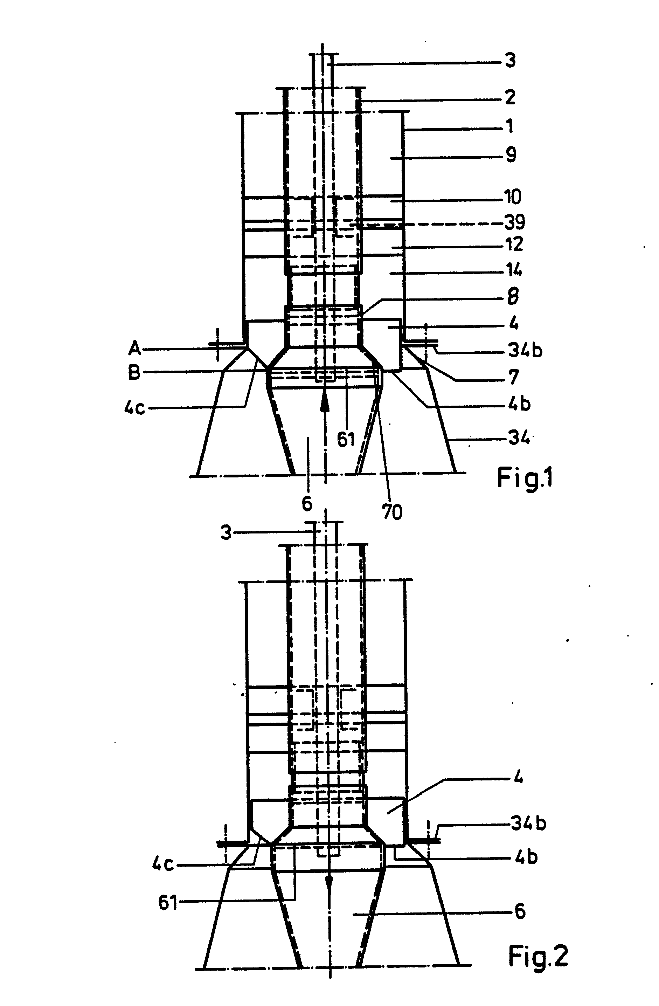

Fig. 1 und 2 zeigen den Grundbaustein aller Ausführungsbeispiele. In einem zylindrichen Gehäuserohr 1 ist ein zylindrisches Innenrohr 2 koaxial angeordnet, und darin ist zentrisch eine Abtriebswelle 3 gelagert, die drehfest mit dem Laufrad 4 verbunden ist. Dieses Laufrad 4 hat eine rohrförmige Nabe 8, die gleitbar unter dem Innenrohr 2 liegt und eine Abdichtung gegen dieses trägt. An das untere Ende der Nabe 8 ist ein konischer Verdrängungskörper 6 mit einem sich nach unten erweiternden Verdrängungskonus 70, der mit dem am Ende des Gehäuserohres sich erweiternden Gehäusekonus 7 eine axial einstellbare und in der Größe veränderliche ringförmige Querschnittsfläche zur Wassermengenregulierung bildet, angebracht.

Bei diesem Ausführungsbeispiel nach den Figuren 1 und 2 schließt sich an das untere Ende des Gehäusemantel 1 ein Gehäusekonus 7 an, dessen obere Verbindungsebene mit A, und dessen untere an das Saugrohr 34 anschließende Ebene mit B bezeichnet ist. Der Abstand der Kanten A,B des Gehäusekonus entspricht etwa der halben Laufradhöhe. Die Abtriebswelle 3 ist obenendig in beliebiger Wiese mit einem die Arbeitsleistung weitergebenden Abtrieb verbunden.

Im Innenrohr 2 sind mit einem Zwischenraum 14 über dem Laufrad 4 zwei feststehende Leitschaufelkränze 10 und 12 angebracht, welche gleichzeitig als Zentrierung für das Innenrohr 2 ausgebildet sind.

Das Innenrohr 2 enthält die Lagerung der Abtriebswelle 3 und unten die erforderlichen Dichtungselemente. Die Abtriebswelle 3 ist außer zur Übertragung des Drehmomentes ein Bestandteil einer anderweitig dargestellten Verstellvorrichtung mit welcher das Laufrad 4 mit der Nabe 8 und dem Verdrängungskörper 6 relativ zum Innenrohr 2 nach oben oder unten in Achsenrichtung verstellt werden kann.

Zwischen dem Innenrohr 2 und dem Gehäusemantel 1 ist ein ringförmiger Strömungskanal 9 für das durchströmende Wasser gebildet.

Im Strömungskanal 9 ist der Leitschaufelkranz 10 mit Leitschaufeln angeordnet, die ortsfest und nicht drehbar sind. Bei dem dargestellten Ausführungsbeispiel ist außerdem ein zweiter Leitschaufelkranz 12 mit flacher liegenden Führungsschaufeln ebenfalls feststehend angebracht.

Die Änderung der Laufradlage ist grundsätzlich so vorgesehen, daß zwischen der oberen Kante A und der unteren Kante B des Gehäusekonus 7 die untere Kante 61 des Verdrängerkonus verstellbar ist. Die Lage bestimmt sich jeweils gemäß einer Steuer- oder Reglervorgabe. Fig. 1 zeigt die untere Endlage des Verstellbereiches bei maximaler Wasserdurchflußmenge bzw. bei maximalem Durchflußquerschnitt, die durch die Länge der Kante 4c bestimmt ist, und Fig. 2 zeigt eine obere Endlage der Verstellung bei minimaler Durchflußmenge und minimalem Durchflußquerschnitt, wobei der Durchflußquerschnitt durch die Länge der Kante 4b bestimmt ist, wobei jeweils die Kreisring- bzw. Kegelfläche zu berücksichtigen ist.

Die Fig. 1 und 2 zeigen in ihrer linken und rechten Hälfte je eine verschiedene Ausführung der Auslaufkanten der Laufradschaufeln 4b, 4c. Die linke Version ist für höhere Wasserstände günstiger und die rechte für im allgemeinen niedrigere. Je nach den im einzelnen vorliegenden Wasser- und Betriebsverhältnissen empfiehlt sich die eine oder die andere oder eine dazwischenliegende Ausführung.

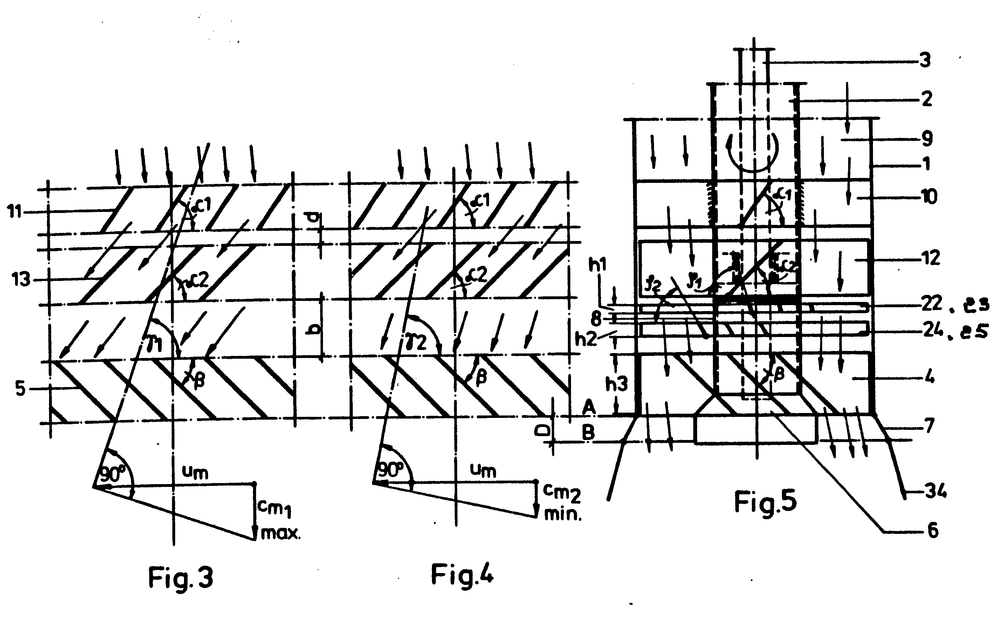

Fig. 3 und 4 zeigen schematische Abwicklungen der Enden der Leitschaufeln 11, 13 der Leitschaufelkränze und der Laufradschaufeln 5 jeweils bei höchster bzw. geringster Durchströmung $cm_1$, $cm_2$. Die Leitschaufeln 11, 13 sind in Stromrichtung mit einem flacher werdenden Anstellwinkel $\alpha_1$, $\alpha_2$ ausgebildet. Bei großer Durchflußmenge wird die Strömung stärker in Rotation versetzt und trifft somit unter einem flacheren Winkel $\gamma_1$ auf das Laufrad, dessen Laufradschaufeln 5 mit dem Winkel $\beta$ entgegengesetzt zu den Leitschaufeln 11, 13 angestellt sind. Diesem flacheren Winkel $\gamma_1$

entspricht der leicht radiale Wasseraustritt bei voll geöffnetem Durchlaß.

Bei geringer Durchströmung gilt das umgekehrte gemäß Fig. 4. Für beide Extremfälle ergeben sich somit günstige Verhältnisse, was auch für den dazwischenliegenden Bereich gilt.

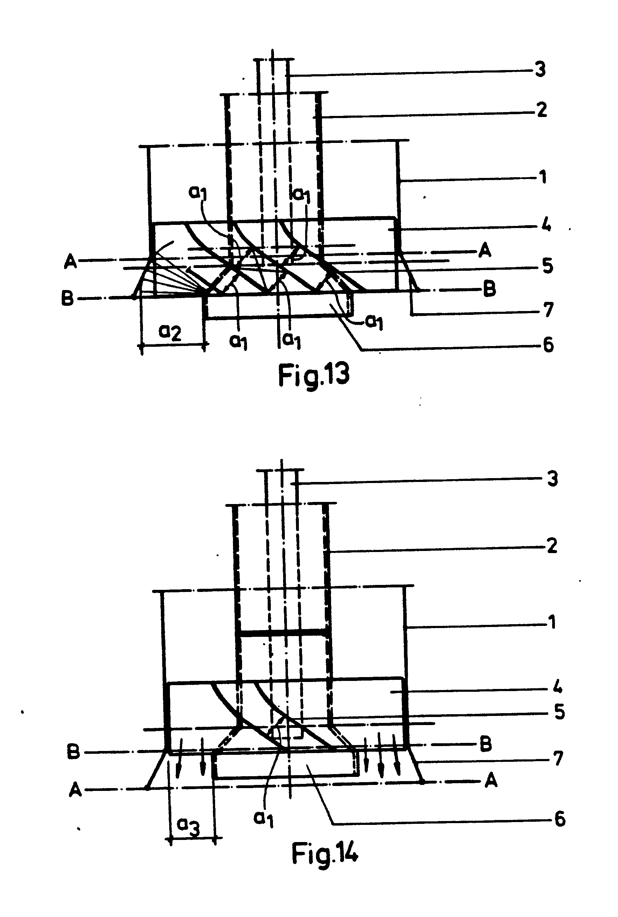

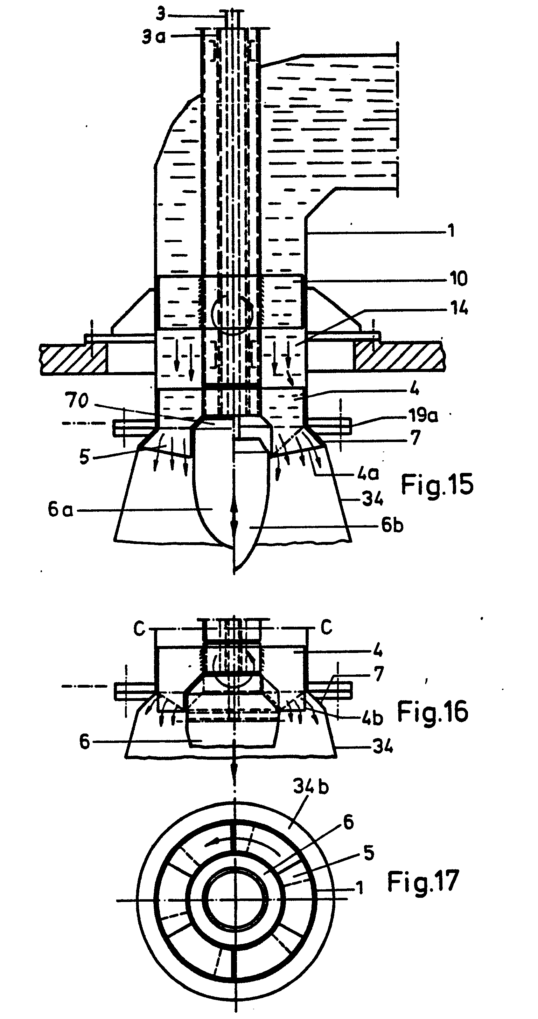

Fig. 5 zeigt eine weiter optimierte Ausführung der Laufradanordnung und enthält schematisch deren Abwicklungen. An der Nabe 8 sind in Stromrichtung in kurzen Abständen drei Schaufelkränze 22, 24, 4, die mit Schaufeln 23, 25 versehen sind hintereinander angeordnet, die in ihrer Bauhöhe zunehmen und in ihren Anstellwinkeln $\varphi_1$, $\varphi_2$, $\beta$ fortlaufend flacher gestaltet sind, wie dies der Umlenkung der Strömung durch die Abbremsung jeweils entspricht. Durch diese Anordnung ist eine zusätzliche Steigerung des Wirkungsgrades möglich; die Herstellung ist verhältnismäßig einfach, da leicht gebogene Schaufeln hergestellt werden müssen. Eine Ausführung des Laufrades mit gebogenen Schaufeln zeigen Fig. 13 und 14, die für besonders niedrige Wasserstände vorzuziehen ist.

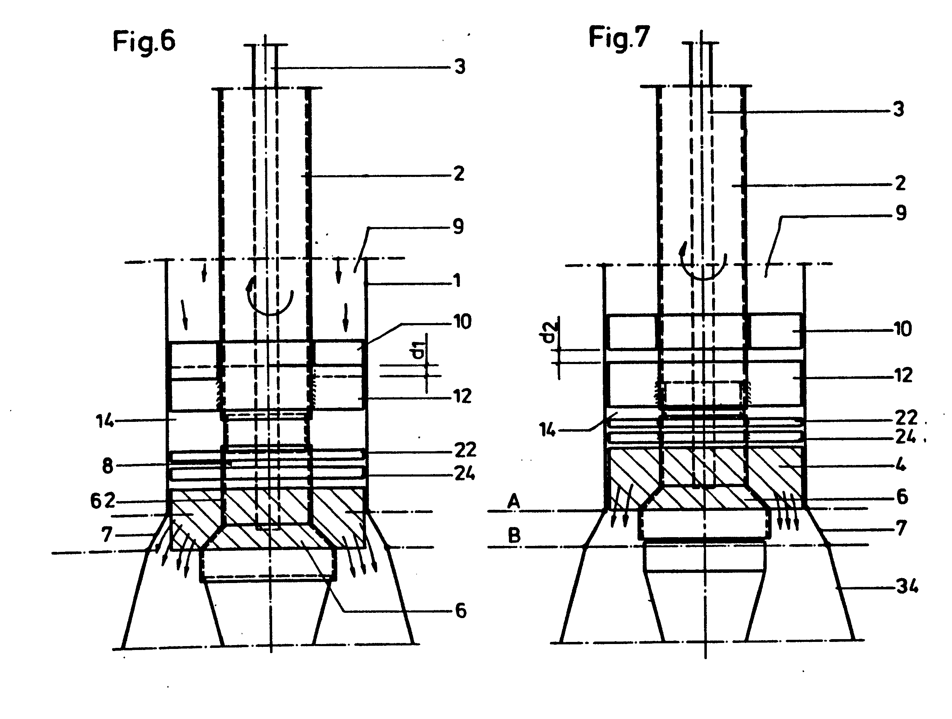

Fig. 6 und 7 zeigen zwei Turbinenausführungen, die jeweils, wie gehabt, auf unterschiedlichen Durchlauf eingestellt sind. Der wesentliche Unterschied besteht darin, daß zur Anpassung an verschiedene Wasserhöhen und die demgemäße gewünschte unterschiedliche Umsetzung der Fallenergie in Rotationsenergie die Leitschaufelkränze 10,12, die standardmäßig ausgeführt sind, zueinander in Stromrichtung verstellbar sind und von einem Ineinandergreifen der Schaufeln um eine Überlappung d1 (Fig. 6) bis zu einem Abstand d2 (Fig. 7) jeweils verschoben gezeigt sind.

In analoger Weise können auch die Schaufelkränze des Laufrades gegeneinander einstellbar ausgeführt sein, so daß mit einem Standardbausatz ein breites Anwendungsgebiet abgedeckt werden kann und auch bei im Laufe der Jahre veränderten Wasserverhältnissen eine Anpassung leicht vorgenommen werden kann.

Weiterhin ist eine zweckmäßige Weiterentwicklung, die beiden Leitschaufelkränze in Axiallage einstellbar auszuführen, wodurch auch der Zwischenkanal 14 zwischen den Leitschaufelkränzen 10,12 und dem Laufrad 4 in seiner Höhe einstellbar ist und die Anströmung weiter optimiert werden kann.

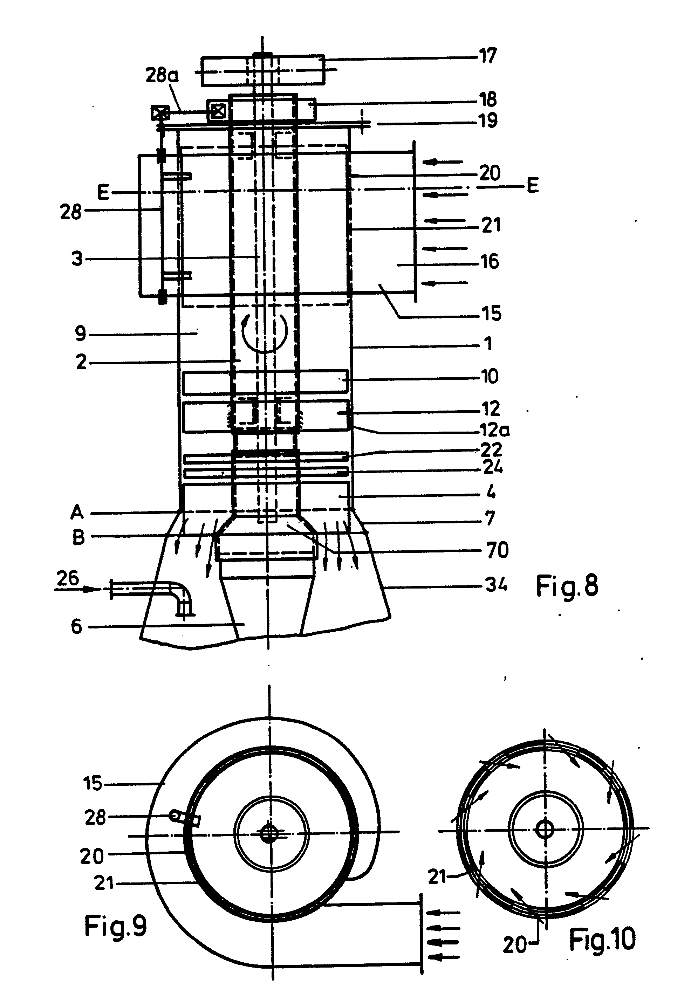

Fig. 8 zeigt die Turbine um eine bekannte Einlaufspirale 15 vervollständigt und den Abtrieb 17, sowie die Stellvorrichtung 18, die zwischen der Abtriebwelle 3 und dem Innenrohr 2 in bekannter, nicht gezeigter Weise angreift. Es ist zu erkennen, daß sämtliche funktionalen Bauteile zu einer Baugruppe so zusammengefaßt sind, daß sie nach Lösen des Flanschverbinders 19 aus dem Gehäusemantel 1 entnommen und überprüft werden können. Im eingebauten Zustand stützt sich die Baugruppe mit dem Außenrand 12a des Schaufelkranzes 12 im Mantel 1 ab.

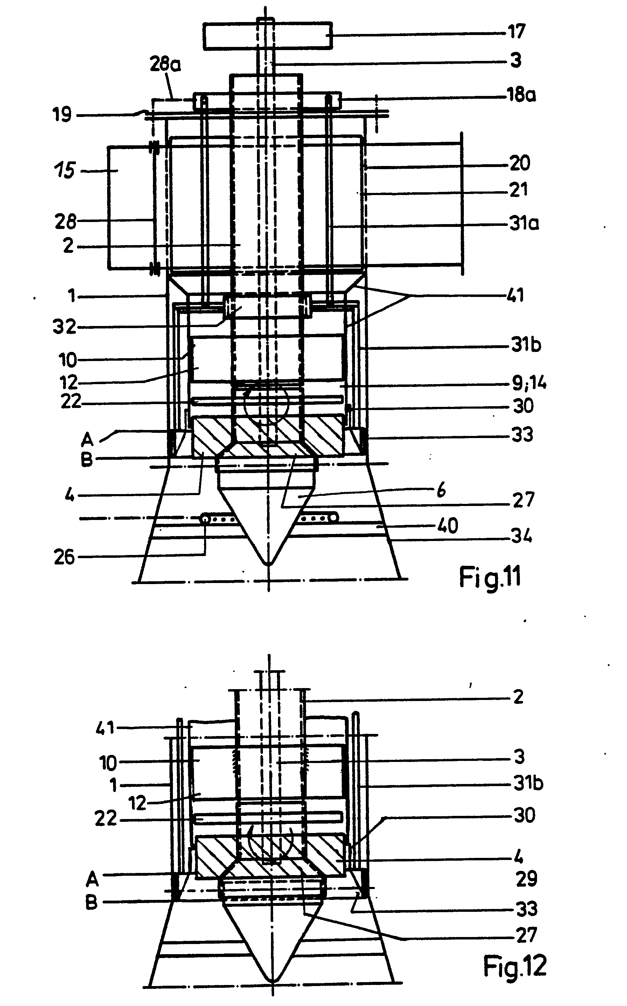

Der Mantel 1 geht im Bereich der Einlaufspirale 15 in ein Rohrgitter 20 über, dessen Durchbrüchen ein innengelagerter Gitterschieber 21 entspricht. Die Anordnung ist in der Draufsicht in Fig. 9 und im Schnitt E-E in Fig. 10 näher gezeigt. Der Gitterschieber 21 ist über eine Spindel 28 zum Öffnen und Schließen des Gatters betätigbar. Die Spindel 28 ist zweckmäßig über einen Stellantrieb 28a, der ein Hebelgestänge, Seilzug oder ähnliches sein kann, mit der Stellvorrichtung 18 so verbunden, daß der Zulauf der Einstellung des Auslaufes entspricht. Durch die Spirale 15 wird die Zuströmenergie in Rotationsenergie umgesetzt. Die Rotationsrichtung wird der Rotationsrichtung der Lenkschaufelströmung gleich gewählt.

Fig. 11 und 12 zeigt eine Turbinenausführung für besonders niedrige Wasserhöhen. Hierbei ist nicht das Laufrad 4 mit dem Verdrängerkonus verschieblich ausgeführt; sondern im Gehäusemantel 1 ist axial verschieblich ein Mantelrohr 30 gelagert, dessen unteres Ende einen sich erweiternden Mantelkonus 33 trägt. Fig. 11 und 12 zeigt dessen Stellung für größten bzw. geringsten Durchlaß. Im übrigen kann die Schaufelgestaltung gemäß Fig. 6 und 7 ausgeführt sein.

Die Verstellung erfolgt von der Stellvorrichtung 18a gegenüber dem Innenrohr 2 über die Stellglieder 31a, 31b, die Gestänge oder ähnliches sind. Der gesamte Turbinensatz ist oben wieder am Flansch 19 gelagert und ist unten im Verdränger 6, der mir Streben 40 im Saugrohr 34 zenrrisch gehalten ist, drehbar und axial herausnehmbar gehaltert.

Vom Bereich der Einlaufspirale 15 führt ein Zulauftrichter 41 zum oberen Leitschaufelkranz, oder er erstreckt sich teilweise seitlich über diesen, vergl. Fig. 12.

In Fig. 13 und 14 sind Abwicklungen der Laufradschaufeln 5 in den beiden extremen Lagen des Gehäusekonus 7 gezeigt. Die Schaufeln 5 haben einen Abstand a1 und sind zunehmend gekrümmt mit von oben nach unten verflachendem Winkel. In der oberen Stellung des Laufrades ist der Querschnitt des Kreisringesgemäß der Weite a3, vergl. Fig. 14 und in der unteren Stellung der Querschnitt des Kegelmantelabschnitts gemäß a2 für den Durchlaß bestimmend.

Fig. 15 zeigt eine Turbine für mittelhohe Wasserstände. Auf eine Einlaufspirale ist verzichtet. Die linke und rechte Zeichnungshälfte ist jeweils für die obere bzw. untere Stellung des Verdrängungskonus 70. Das Laufrad 4 ist axial nicht verschieblich sondern nur der Verdrängerkonus 70 mit dem Verdränger 6. Das Laufrad 4 ist an einer Hohlwelle 3a, die dem Abtrieb dient, befestigt, und der Verdränger 6 ist an der Steuerwelle 3, die in der Hohlwelle 3a verschieblich geführt ist, befestigt. Durch gegenseitige Verschiebung der Wellen 3, 3a wird somit der Verdränger gegen das Laufrad verschoben. Die Laufradschaufeln 5 bilden deshalb eine innere Aussparung, die der Höhe des Gehäusekonus 7 entspricht. In der oberen Stellung des Verdrängers schließt dessen obere Kontur mit den Laufradschaufeln ab. Dadurch ist der minimale Durchlauf gegeben, vergl. Fig. 15, links.

Um eine gute Ausnutzung der Wasserkraft bei hohem Wasserdruck zu ermöglichen, sind die Laufradschaufeln 4 gemäß der Kante 4a in den Mantelkonus 7 hineingeführt.

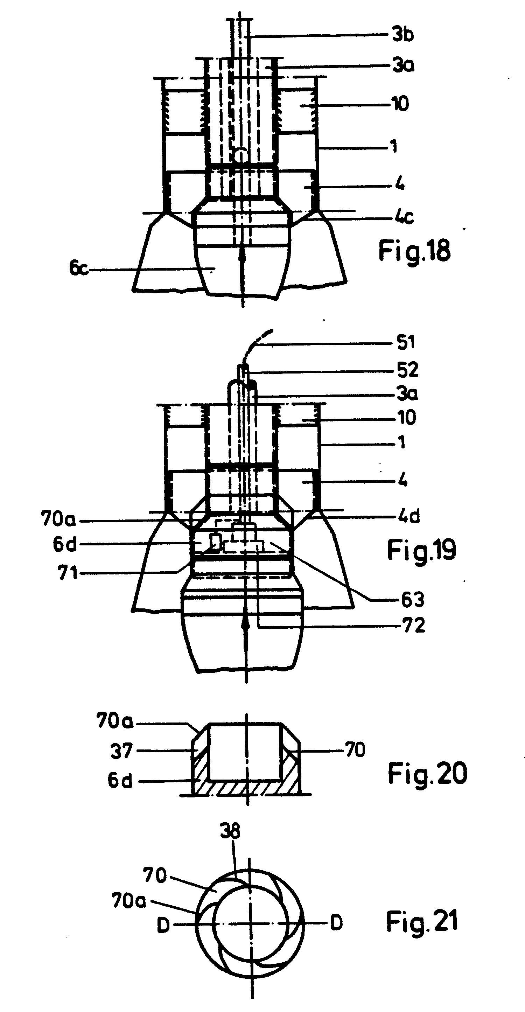

Dadurch arbeitet die Turbine verstärkt radial mit der Rotationsenergie. Fig. 16 zeigt hingegen eine waagerechte Unterkante der Laufradschaufeln. Je nach verfügbarer Wasserhöhe liegt das Optimum zwischen diesen Ausführungen, wie z. B. in Fig. 18 mit Kante 4c gezeigt. Fig. 17 zeigt eine Ansicht gemäß Schnitt C-C von oben.

Fig. 19 zeigt eine alternative der Verknüpfung der Stellvorrichtung mit dem Verdränger 6d. Dabei ist die verschiebliche Welle durch einen Abstandsmelder 71 und eine Hydraulik 72 ersetzt, deren Signalverbindung 51 bzw. Hydraulikleitungen 52 durch die Hohlwelle 3a geführt sind.

In Fig. 20 und 21 ist eine vorteilhafte Ausgestaltung des Bereiches oberhalb des Verdrängerkonus 70 gezeigt, in dem ein Schaufelkranz 37 mit Schaufeln 38 angeordnet ist, dessen obere Kontur 70a mit der unteren Laufradkontur abschließend oder in der höchsten Stellung auch in diese hineinreichend gestaltet sein kann. Im letzteren Fall wird der Verdränger so mit der Steuerung verbunden, daß er mit dem Laufrad mitrotieren kann.

Die Schaufeln 38 sind so gestellt, wie die Aufsicht Fig. 21 zeigt, wenn ein Mitrotieren vorgesehen ist. Ist der Verdränger 6d feststehend, so sind die Schaufeln entgegengesetzt orientiert, so daß das von oben eintretende Wasser zusätzlich in Rotation versetzt wird, die die Laufradschaufeln antreibt. Die Gestaltung der Schaufeln ist nur beispielhaft gezeigt und kann den Erfordernissen gemäß variiert werden.

In Fig. 8 und 11 ist im Bereich des Turbinenauslaufs eine Düsenanordnung 26 gezeigt, mit der dem ausströmenden Wasser Luft zur Verbesserung der Wasserqualität in einfacher Weise zugeführt werden kann. Durch die konische Erweiterung des Saugrohres 34 und die Verengung des Durchlasses am Austritt der Turbine tritt in diesem Bereich ein Unterdruck auf, der die Luft ansaugt. Durch den Luftzustrom wird bei geeigneter Dosierung und geeigneter z.B. ringförmiger Plazierung der Düsen der Unterdruck begrenzt, wodurch einer Kavitation an dem unteren Laufradkanten vorgebeugt wird.

**Patentansprüche**

1. Wasserturbine mit einer um eine vertikale Achse drehbar gelagerten Abtriebswelle (3) mit einem mit Laufradschaufeln (5) besetzten Laufrad (4), das von einem feststehenden Gehäusemantel (1) konzentrisch umgeben ist, und mit einem in Strömungsrichtung vor dessen Laufradschaufeln (5) koaxial angeordneten Leitschaufelkranz (10), dessen Leitschaufeln (11) so zu der Laufradschaufelstellung orientiert sind, daß einströmendes Wasser mit hohem Wirkungsgrad das Laufrad (4) antreibt, und mit einer verschieblichen Einstellvorrichtung (6, 3; 70, 4, 3, 18; 33, 31a, 31b, 18a; 6, 72), durch die der wirksame Austrittsquerschnitt (a2, a3) des Laufrades (4) verändert werden kann, dadurch gekennzeichnet, daß der Leitschaufelkranz (10) über dem Laufrad angeordnet ist und an dem zylindrischen Gehäusemantel (1) unterhalb oder neben dem unteren Bereich des Laufrades (5), sich in Strömungsrichtung erweiternd ein Gehäusekonus (7, 33) angeschlossen ist und das Laufrad (4) eine zylindrische Nabe (62) besitzt, die im Bereich des Austrittsquerschitte übergeht in einen sich in Strömungsrichtung erweiternden Verdrängerkonus (70), und der Gehäusekonus (7, 33) und der Verdrängerkonus (70) in Bezug zueinander axial so verschieblich gelagert sind, daß die abstromseitige Kante (61) des Verdrängerkonus (70) zwischen den beiden Kanten (A, B) des Gehäusekonus (7, 33) einstellbar ist.

2. Wasserturbine nach Anspruch 1, dadurch gekennzeichnet, daß der Verdrängerkonus (70) mit der Nabe (8) fest verbunden ist und das Laufrad (4) mit dem Verdrängerkonus (70) gemeinsam axial verschieblich ist oder daß der Verdrängerkonus (70) gegen die Nabe (8) axial verschieblich gelagert ist und daß die Abtriebswelle (3, 3a), mit einem Abtrieb (17) verbunden ist und der Verdrängerkonus (70) direkt über die Abtriebswelle (3) oder durch die als Hohlwelle (3a) ausgeführte Abtriebswelle hindurch mit einer Steuerwelle (3b) oder mit vorzugsweise hydraulischen Steuerleitungen (52), die zu einen Hydraulikstellglied (72) im Verdränger (6) führen, mit einer Stellvorrichtung (18) verbunden ist, die die axiale Lage des Verdrängerkonus (70) zu dem Gehäusekonus (7) vorgibt.

3. Wasserturbine nach Anspruch 1, dadurch gekennzeichnet, daß der Gehäusekonus als Mantelkonus (33) im Gehäusemantel (1) axialverschieblich gelagert ist und über Stellglieder (31a, 31b), z.B. Gestänge oder Seilzüge, mit einer Stellvorrichtung (18a) verbunden ist, die die axiale Lage des Gehäusekonus (33) zu dem Verdrängerkonus (70) vorgibt.

4. Wasserturbine nach Anspruch 1, dadurch gekennzeichnet, daß der Leitschaufelkranz (10, 11) und/oder das Laufrad (4, 22, 24) aus mehreren axial hintereinander angeordneten Schaufelkränzen besteht, deren Leitschaufeln (11, 13) bwz. Laufradschaufeln (5, 23, 25) in Strömungsrichtung jeweils zunehmend flacher gestellt sind, und daß die Leit- und/oder Laufradschaufelkränze (10, 12; 22, 24, 4) axial verschieblich und feststellbar vorzugsweise auf einem Innenrohr (2) oder im Gehäusemantel (1) bzw. auf der Nabe (8) angebracht sind, wobei die Schaufeln (11, 13; 23, 25; 25, 5) benachbarter Leit- bzw. Laufradschaufelkränze vorzugsweise teilweise überlappbar sind.

5. Wasserturbine nach Anspruch 1, dadurch gekennzeichnet, daß die Leitschaufeln (11) und/oder die Laufradschaufeln (5) jeweils von oben nach unten einen zunehmend flacheren Anstellwinkel haben.

6. Wasserturbine nach Anspruch 1, dadurch gekennzeichnet, daß je nach deren Verwendung
 - für niedrige durchschnittliche Wasserhöhe die Unterkante (4b) der Laufradschaufeln (5) von der Unterkante (61) des Verdrängerkonus (70) waagerecht verläuft,
 - für mittlere durchschnittliche Wasserhöhen die Unterkante (4c, 4d) der Laufradschaufeln (5) von der Unterkante (61) des Verdrängerkonus (70) in maximaler Durchflußstellung schräg nach oben auf die Oberkante (A) des Gehäusekonus (7) zu verläuft.

7. Wasserturbine nach Anspruch 1, dadurch gekennzeichnet, daß auf dem Verdrängerkonus (70), der verschieblich angeordnet ist, ein Schaufelkranz (37) mit schräg zum Radius gerichteten, vorzugsweise gekrümmten, Schaufeln (38) angeordnet sind, die
 - bei feststehendem Verdrängerkonus (70) in einen Freiraum des Laufrades (4) hineinragen und den Laufradschaufeln (5) entgegen gerichtet sind oder
 - bei mit dem Laufrad (4) mitlaufendem Verdrängerkonus (70) in einen Freiraum des Laufrades (4) hineinragen und bei nach oben verschobenem Verdrängerkonus (70) in das Laufrad (4) hineinragend angeordnet sind.

8. Wasserturbine nach Anspruch 1 dadurch gekennzeichnet, daß sich an den Gehäusemantel (1) obenendig ein Rohrgitter (20) anschließt, das von einer Einlaufspirale (15) umgeben ist und gegen das innenseitig ein entsprechend gelochter Gitterschieber (21) verstellbar gelagert ist, und die Einlaufrichtung der Spirale (15) der Drehrichtung des Leitschaufelkranzes (10, 12) entspricht und der Gitterschieber (21) über einen Stellantrieb (28a) mit der Stellvorrichtung (18, 18a) gleichsinnig in Verbindung steht.

9. Wasserturbine nach einem der vorherigen Ansprüche dadurch gekennzeichnet, daß sämtliche beweglichen und verschieblichen Bauteile mit dem Innenrohr (2) zu einer Baugruppe verbunden sind und über einen Flansch (19, 19a) mit dem Gehäusemantel (1) lösbar verbunden sind und vorzugsweise der Leitschaufelkranz (10) eine verschiebliche Zentrierung zwischen dem Innenrohr (2) und dem Gehäusemantel (1) bildet.

10. Wasserturbine nach Anspruch 1 dadurch gekennzeichnet, daß unterhalb des Laufrades (4) Luftzutrittsdüsen (26) angeordnet sind.

## Claims

1. Water turbine with a vertically oriented rotatable main shaft (3) carrying a turbine rotor (4) with rotor blades (5), which rotor is surrounded concentrically by a fixed casing (1), and with a circular guide blade arrangement (10) being positioned coaxially up-stream of the rotor blades (5), and which guide blade arrangement (10) carries guide blades (11) being oriented such to the position of the rotor blades (5), that incoming water is acting at a high gain onto the rotor (4), and with a shiftable setting means (6, 3; 70, 4, 3, 18; 33, 31a, 31b, 18a; 6, 72) by means of which the effective outlet cross section (a2, a3) of the rotor (4) is changeable, characterized in that the guide blades arrangement (10) is positioned over the rotor, and at the cylindrical casing (1) underneath or sideways of the lower region of the rotor (4) a casing cone (7, 33) is connected, which is directed down-stream with its widening end, and the rotor (4) has a cylindrical hub (62), which in the region of the outlet cross section is widening in the down-stream direction into a displacing cone (70), and the casing cone (7, 33) and the displacing cone (70) are shiftable supported relative to each other such, that the down-stream rim (61) of the displacing cone (70) is settable between the two edges (A, B) of the casing cone (7, 33).

2. Water turbine according to claim 1, characterized in that the displacing cone (70) is fixed to the hub (8), and the rotor (4) is axially shiftable together with the displacing cone (70), or the displacing cone (70) is supported axially shiftable relative to the hub (8), and the main shaft (3, 3a) is connected to a gear means (17), and the displacing cone (70) is connected to a setting means (18) by means of the main shaft (3) itself or by means of a control shaft (3b) or by means of control tubes (52), preferably for hydraulic actuation, this control shaft (3b) or these control tubes (52) being fed through a hollow shaft, which is the main shaft (3a), such control tubes (52) are connected to a hydraulic setting means (72), which is positioned in the displacing unit (6), and by the setting means (18) the axial position of the displacing cone (70) in relation to the casing cone (7) is given.

3. Water turbine according to claim 1, characterized in that the casing cone is a shell cone (33), which is supported axially shiftable in the casing (1), and which shell cone (33) is connected to a setting unit (18a) by setting means (31a, 31b), e.g. poles or pull ropes, by which setting means (31a, 31b) the axial position of the casing cone (33) relative to the displacing cone (70) is given.

4. Water turbine according to claim 1, characterized in that the circular guide blade arrangement (10, 11) and/or the rotor (4, 22, 24) consists of several circular blade arrangements, which are arranged axially in line, whereby the guide blades (11, 13) of these guide blade arrangements respectively the rotor blades (5, 23, 25) are arranged in a progressively flatened way proceeding in the down-stream direction, and the guide blade arrangements and/or rotator blade arrangements (10, 12; 22, 24, 4) are mounted axially shiftable and fixable preferably on a centre tube (2) or in the casing (1) respectively on the hub (8), whereby the blades (11, 13; 23, 25; 25, 5) of neighboured guide blade arrangements respectively rotor blade arrangements preferably are overlapping each other to a certain extent.

5. Water turbine according to claim 1, characterized in that the guide blades (11) and/or the rotor blades (5) show an angle of inclination which angle is flatened more and more top to bottom.

6. Water turbine according to claim 1, characterized in that according to their application
 - when a low water level is given in the average, then the lower edges (4b) of the rotor blades (5) are extending horizontally from the lower edge (61) of the diplacing cone (70),
 - when the a medium high water level is given in the average, then the lower edge (4c, 4d) of the rotor blades (5) are extending inclined upwards from the lower edge (61) of the diplacing cone (70) to the upper edge (A) of the casing cone (7), when a setting of maximum passage is given.

7. Water turbine according to claim 1, characterized in that on top of the diplacing cone (70), which is arranged shiftable, a blade star (37) is positioned having blades (38), which are inclined to the radius and which blades (38) preferably are curved, and
 - if the displacing cone (70) is not rotatable, then these blades (38) extend into a hollow chamber in the rotor (4) and they are directed cross-wise to the rotor blades (5), or
 - if the displacing cone (70) is rotatable together with the rotor (4), then these blades (38) extend into hollow chamber in the rotor (4), or in case the displacing cone (70) is shifted upwards, then these blades (38) extend into the rotor (4).

8. Water turbine according to claim 1, characterized in that at the upper end of the casing (1) a cylinder gate (20) is attached, which is surrounded by a feeding spiral (15), and attached to which cylinder gate (20) a settable shift gate (21) having corresponding holes is arranged inside of it, and the feeding sense of the spiral (15) is corresponding to the turning sense of the guide blade arrangement (10, 12), and the shift gate (21) is connected to the setting unit (18, 18a) by a setting means (28a) such, that the shift gate is operated in the same sense of effectiveness.

9. Water turbine according to one of the preceding claims, characterized in that all the movable and shiftable construction elements are connected to the centre tube (2) forming one building block with it, which building block is disconnectable mounted by means of a flange (19, 19a) to the casing (1),

and a shiftable centering is given between the centre tube (2) and the casing (1) preferably by the guide blade arrangement (10).

10. Water turbine according to claim 1, characterized in that air inlet nozzles (26) are positioned underneath of the rotor (4).


**Revendications**

1. Turbine hydraulique avec un arbre de sortie (3), monté orientable autour d'un axe vertical, avec une roue à aubes (4) pourvue d'aubes motrices (5) et entourée concentriquement d'un manteau carter fixe (1), avec une couronne à aubes directrices (10), disposées coaxialement dans le sens du flux, en amont des aubes motrices (5) et dont les aubes directrices (11) sont orientées par rapport à la position des aubes motrices de sorte que l'eau affluant entraîne la roue à aubes (4) à un degré de rendement élevé, et avec un dispositif de réglage décalable (6, 3; 70, 4, 3, 18; 33, 31a, 31b, 18a; 6, 72) à l'aide duquel la section de sortie efficiente (a2, a3) de la roue à aubes (4) peut être modifiée, cette turbine hydraulique étant caractérisée par le fait que la couronne à aubes directrices (10) est disposée au-dessus de la roue à aubes et qu'un cone de carter (7, 33), s'élargissant vers le bas dans le sens du flux, est raccordé au manteau de carter cylindrique (1) au-dessous ou à côté du secteur inférieur de la roue à aubes (4), que la roue à aubes (4) présente un moyen cylindrique (62) lequel passe, dans le secteur de la section de sortie, à un cone volumétrique (70), et que le cone de carter (7, 33) et le cone volumétrique (70) sont déplaçables axialement par rapport l'un à l'autre de sorte que l'arête côté écoulement (61) du cone volumétrique (70) est réglable entre les deux bords du cone (A, B) du cone de carter (7, 33)

2. Turbine hydraulique selon spécification 1, caractérisée par le fait que le cone volumétrique (70) est relié fixement au moyen (8) et que la roue à aubes (4) peut être déplacée axialement, en commun avec le cone volumétrique (70), ou que le cone volumétrique (70) est monté déplaçable axialement contre le moyen (8) et que l'arbre de sortie (3, 3a) est relié à un engrenage (17) et que le cone volumétrique (70) est relié à un dispositif de réglage (18) directement par l'intermédiaire de l'arbre de sortie (3) ou par l'arbre de sortie conçu sous forme d'arbre creux (3a), avec un arbre de commande (3b) ou des conduites de pilotage de préférence hydauliques (52) conduisant à un organe de régage (72) dans le dispositif volumétrique (6), le dispositif de réglage (18) déterminant la position axiale du cône volumétrique (70) dans le cône du carter (7).

3. Turbine hydraulique selon spécification 1, caractérisée par le fait que le cône du carter est monté, en tant que cône de manteau (33), dans le manteau du carter (1), étant axialement déplaçable, et relié par l'intermédiaire d'organes de réglage (31a, 31b), p.ex. tiges ou câbles, à une dispositif de réglage (18a), déterminant la position axiale du cône de carter (33) par rapport au cône volumétrique (70).

4. Turbine hydraulique selon spécification 1, caractérisée par le fait que la couronne à aubes directrices (10, 11) et/ou la roue à aubes (4, 22, 24) consiste/nt en plusieurs couronnes à aubes disposées axialement les unes derrière les autres et dont les aubes directrices (11, 13) respectivement: aubes motrices (5, 23, 25) s'aplatissent progressivement dans le sens du flux, et que les couronnes à aubes directrices et/ou les couronnes à aubes motrices (10, 12; 22, 24, 4) sont disposées, déplaçables et réglables axialement, de préférence sur un tube intérieur (2) ou dans le manteau de carter (1), ou sur le moyen (8), les aubes (11, 13; 23, 25; 25, 5) de couronnes à aubes directrices ou à aubes motrices voisines étant de préférence partiellement chevauchables.

5. Turbine hydraulique selon spécification 1, caractérisée par le fait que les aubes directrices (11) et/ou les aubes motrices (5), vues du haut vers le bas, possèdent un angle d'incidence de plus en plus plat.

6. Turbine hydraulique selon spécification 1, caractérisée par le fait que, selon son but d'utilisation,
- l'arête inférieure (4b) des aubes motrices (5) s'étend horizontalement à partir de l'arête inférieure (61) du cône volumétrique (70) pour un niveau d'eau faible en moyenne.
- l'arête inférieure (4c, 4d) des aubes motrices (5) remonte obliquement vers l'arête supérieure (A) du cône de carter (7), en partant de l'arête inférieure (61) du cône volumétrique (70) en réglage de débit maximum, le niveau de l'eau étant, en moyenne, moyen.

7. Turbine hydraulique selon spécification 1, caractérisée par le fait que, sur le cône volumétrique (70) déplaçable, une couronne à aubes (37) est installée, laquelle est pourvue d'aubes (38), dirigées vers le rayon et incurvées de préférence.
- en cas de cône volumétrique (70) fixe, ces aubes (38) saillissent dans un espace libre de la roue à aubes (4) et sont dirigées à l'inverse des aubes motrices (5).
- en cas de cône volumétrique (70) se déplaçant avec la roue à aubes (4), ces aubes (38) saillissent dans un espace libre de la roue à aubes (4), tandis qu'en cas de cône volumétrique (70) décalè vers le haut, elles font saillie dans la roue à aubes (4).

8. Turbine hydraulique selon spécification 1, caractérisée par le fait qu'une grille tubulaire (20) fait suite au manteau du carter (1), à l'extrémité supérieure duquel elle est raccordée: que cette grille tubulaire (20) est entourée d'une bâche d'entrée (15); qu'un tiroir à grille, adéquatement perforé, réglable (21), est monté inrieurement, contre la grille tubulaire; que le sens d'entrée de la bâche (15) correspond au sens de rotation de la couronne à aubes directrices (10, 12) et que le tiroir à grille (21) est en relation avec le dispositif de régage (18, 18a) en même sens, par l'intermédiaire d'un organe de réglage (28a).

9. Turbine hydraulique selon l'une des spécifications précédentes, <u>caractérisée par le fait que</u> tous les éléments de construction mobiles et déplaçables sont reliés en un sous-groupe au tube intérieur (2) et, par l'intermédiaire d'une bride (19, 19a), au manteau de carter (1) de façon amovible et que, de préférence, la couronne à aubes directrices (10) forme un centrage déplaçable entre le tube intérieur (2) et le manteau de carter (1).

10. Turbine hydraulique selon spécification 1, <u>caractérisée par le fait que</u> des buses d'arrivée d'air (26) sont disposées au-dessous de la roue à aubes (4).

Fig.1

Fig.2

Fig.5

Fig.4

Fig.3

Fig.7

Fig.6

Fig.8

Fig.9

Fig.10

Fig.11

Fig.12

Fig.13

Fig.14

0 110 141

Fig.15

Fig.16

Fig.17

Fig.18

Fig.19

Fig.20

Fig.21